Europäisches Patentamt

European Patent Office

Office européen des brevets

(11) Publication number: **0 094 995**
**B1**

(12) **EUROPEAN PATENT SPECIFICATION**

(45) Date of publication of patent specification: **26.02.86**

(51) Int. Cl.⁴: **A 01 B 33/02**

(21) Application number: **82302626.5**

(22) Date of filing: **21.05.82**

(54) **Cultivating tool.**

(43) Date of publication of application:
**30.11.83 Bulletin 83/48**

(45) Publication of the grant of the patent:
**26.02.86 Bulletin 86/09**

(84) Designated Contracting States:
**AT BE CH DE FR IT LI NL**

(56) References cited:
**DE-C- 865 222**
**US-A-2 834 276**
**US-A-4 249 612**

(73) Proprietor: **Simpson, Victor John**
**Tally Ho Onslow Road Burwood Park**
**Walton-on-Thames (GB)**

(72) Inventor: **Simpson, Victor John**
**Tally Ho Onslow Road Burwood Park**
**Walton-on-Thames (GB)**

(74) Representative: **Boydell, John Christopher et al**
**Stevens, Hewlett & Perkins 5 Quality Court**
**Chancery Lane**
**London, WC2A 1HZ (GB)**

## Description

This invention relates to a power driven cultivating tool such as may be used in a domestic garden as an alternative to manual tilling of the soil with a garden spade or fork.

U.S. patent specifications 2834276 and 4249612 both describe wheeled cultivators in which is provided some means of anchoring the machine against movement during use. U.S. 2834276 in particular describes a cultivating tool in which a rotating soil-cultivating blade may be pushed into the ground whilst being anchored by a spiked bar which latter is pushed into the ground by the operator. The present invention concerns a non-wheeled cultivator which incorporates such anchoring means and in which the weight of the machine is supported by the anchoring means.

According to the invention there is provided a cultivating tool comprising a frame having a handle which in use may be gripped by an operator, drive means mounted on said frame, at least one cultivator blade mounted for rotation by said drive means, and a pair of anchor legs for blocking movement of the tool along the ground during use, said tool being characterised in that said anchor legs are slidably mounted in respective bores in said frame and by spring means acting to bias each anchor leg in a direction out of its respective bore in such a way as to support the weight of the tool by engagement of the outer ends of the legs with the ground and to absorb reaction forces generated by the cultivator blade.

In operation, the operator holds the handle and forces the anchor legs against the ground to be cultivated against the pressure of the spring means. Preferably inhibit means are provided to ensure that the cultivator blades cannot rotate until the anchor legs are firmly secured to the ground, thus ensuring safety in operation.

In a preferred embodiment of the invention the frame is such as to define a pair of elongate bores in each of which a respective anchor leg is slidably mounted. In addition said spring means may be located within each bore and in order to act between a respective first stop means in the bore and the respective anchor leg in order to bias the anchor leg in a direction out of the bore, further stop means being provided for ensuring that the anchor leg is not pushed out of the bore by the spring means. The lower end of each anchor leg may be conveniently shaped to a spike or such shape as to provide an anchorage in the soil during operation.

In a preferred embodiment the drive means comprises an electric motor and, optionally, an associated gearbox. A final drive unit driven by the gearbox (if any) carries a double ended horizontal rotating final drive shaft. A suitable cultivating rotor is attached to each of the final drive shaft extensions. Each rotor may embody a number of radially disposed blades of a suitable configuration to produce a good cultivated tilth in operation. The function of the telescopic legs is to anchor the cultivator in a fixed position whilst the operator allows the cultivator to dig down to the required depth. To facilitate this action each leg is spring loaded within the tubular frame by means of said spring means. Clearly, the bias force of the spring means must be sufficient to support the physical weight of the tool. Pressure on the handle by the operator either forces the anchor legs into the soil or retracts them into the tubular frame, against the bias force of the spring means. An operating switch controlling the electric motor may conveniently be located on the tubular handle. Said inhibit means may comprise an over-ride limit switch connected in series with the operating switch in order to prevent the motor from operating until downward pressure is applied to the handle by the operator causing the anchor legs to retract slightly and thus starting the motor through the action of the limit switch operating on an indent in one of the anchor legs.

In order that the invention may be better understood, an embodiment thereof will now be described by way of example only and with reference to the accompanying drawings in which:—

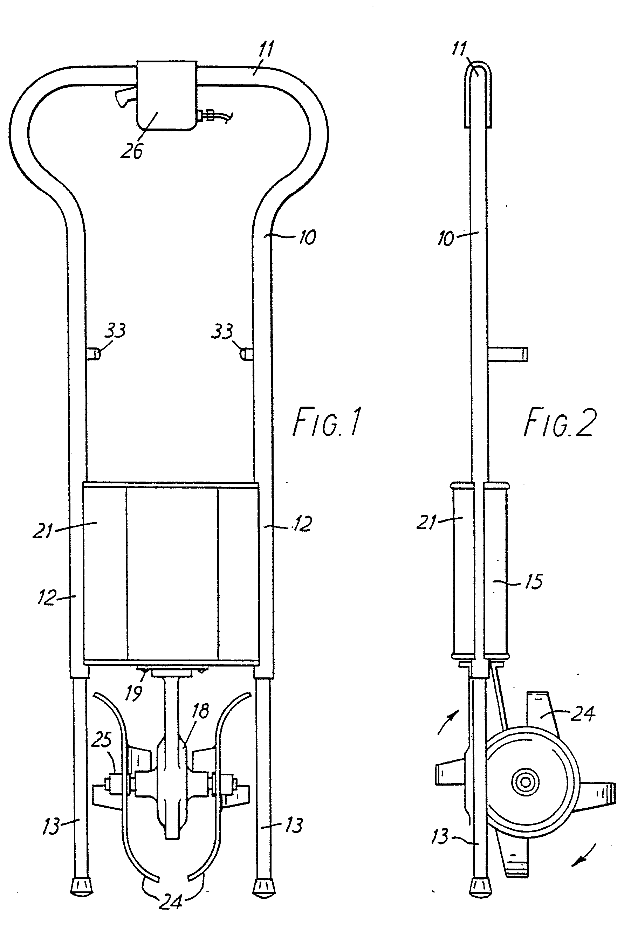

Figure 1 is a front elevation of an embodiment of a cultivating tool according to the invention;

Figure 2 is a side elevation of the tool shown in Figure 1;

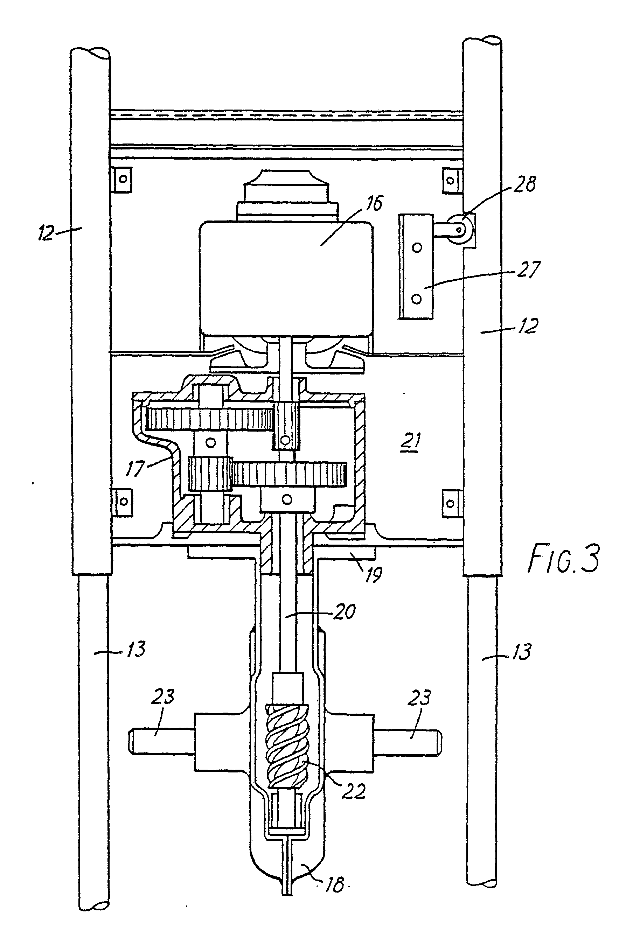

Figure 3 is a vertical sectioned elevation of the electric motor and gearbox and final drive arrangement in the tool of Figure 1; and

Figure 4 is a vertical sectioned elevation of one side of the frame with anchor leg and spring in the tool of Figure 1.

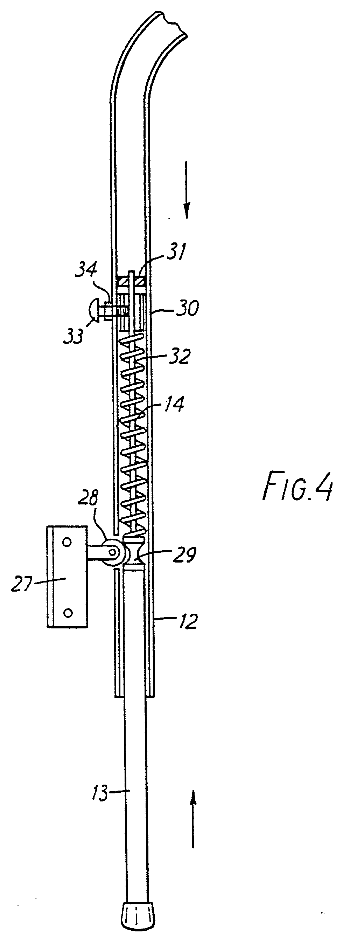

Referring to the drawings, the tool comprises a U-shaped tubular frame 10 formed in such a manner as to provide a widened portion 11 intended to act as an operating handle. The legs 12 of the frame each house a respective telescopic anchor leg 13 and a compression spring 14 (see Figure 4). Cross braces extend between the legs 12 and serve to mount an electric motor 16 and primary reduction gearbox 17. A two-part cover consisting of cover members 15 and 21 enclose the motor and gearbox. Power from the gearbox is transmitted to a final drive unit housed within a housing 18 attached to the bottom of the housing 15/21 by means of a flange 19. The final drive unit comprises a worm gear 22 which is mounted on the output shaft 20 of the gearbox and drives a pinion (not shown) mounted on a final drive shaft 23.

The drive shaft 23 extends from both sides of the housing 18 to define two stub axles on which are mounted the cultivator rotors. Each cultivator rotor comprises a boss 25 mounted on a respective stub axle and to which are attached a plurality, for example four, rotor blades 24.

The electric motor 16 is controlled by a hand-operated switch 26 mounted on the handle. A further limit switch 27 may conveniently be introduced in series with the switch 26 to override the command of the latter. The switch 27 is operated by an extendable arm on the end of which is mounted a roller 28. The normal position of the switch 27 is open, in other words, even if the switch 26 is operated, power is not transmitted to the motor. This position of switch 27 is shown in Figure 4. It will be seen that, in this position, the roller 28 protrudes through an aperture in one of the legs 12 and engages a waisted bobbin 29 which is slidably mounted within the leg 12. The bobbin 29 is mounted between the inner end of leg 13 and the corresponding spring 14 and may or may not be attached to the leg 13. The other end of spring 14 bears against an adjustable stop, as will be explained later. It will be seen that, by the action of the roller 28 on the bobbin 29 in the telescopic leg 13, the motor will only operate when there is downward pressure on the operating handle 11.

In use, the operator stands holding the handle 11 with the tool in front of him in a substantially upright position. Downwards pressure on the handle causes the roller 28 to ride up over the indent defined by the bobbin 29 and at the same time causes the legs 13 to be forced under pressure from spring 14 against the ground. Depending upon the nature of the ground, the leg may or may not penetrate into the surface. The switch 26 may then be operated to supply electrical power to the motor. Rotation of the cultivator rotors 24 in operation produces a force tending to urge the cultivator away from the operator and, were it not for the telescopic anchor legs 13 restraining the appliance in a fixed position, the power driven rotors would propel the cultivator over the surface of the soil. It is the action of the telescopic anchor legs 13 which allows the operator to control the depth of cultivation of the soil. The anchor legs also absorb the reaction forces created by the power driven rotors during the digging operation and render the appliance more comfortable to use with less effort.

The telescopic anchor legs 13 and associated springs 14 are fitted to both legs 13 of the frame 10 in the described embodiment. The depth which the leg 13 retracts into the tubular leg 12 may be controlled by a stop 30. The stop 30 comprises a hollow cylindrical member which is fixed in place within the respective leg 12 by means of a bolt 33 and locking nut 34. The bolt passes through a small hole in the wall of leg 12, and a series of such holes along the length of leg 12 will enable the position of the stop to be adjusted for different conditions of use.

Movement of the leg 13 in the downwards direction is limited by a stop 31 which is attached to a rod 32 which is itself attached to the leg 13.

The above described tool eliminates the need for counter rotating rotors which has hitherto been the accepted art to counter the reaction forces created during the digging operation or alternatively physical effort to guide the cultivator against the reaction forces created in operation.

Although shown as fitted with a drive means in the form of an electric motor, it will be clear that other alternatives, such as a small petrol engine would be possible.

## Claims

1. A cultivating tool comprising a frame (10) having a handle (11) which in use may be gripped by an operator, drive means mounted on said frame, at least one cultivator blade (24) mounted for rotation by said drive means, and a pair of anchor legs (13) for blocking movement of the tool along the ground during use, said tool being characterised in that said anchor legs (13) are slidably mounted in respective bores in said frame (10) and by spring means (14) acting to bias each anchor leg in a direction out of its respective bore in such a way as to support the weight of the tool by engagement of the outer ends of said legs with the ground and to absorb reaction forces generated by the cultivator blade (24).

2. A cultivating tool according to claim 1 wherein the frame is such as to define a pair of elongate bores in each of which a respective anchor leg (13) is slidably mounted and wherein said spring means (14) is located within each bore and acts between a respective first stop means (30) in the bore and the respective anchor leg in order to bias the anchor leg in a direction out of the bore, further stop means (31) being provided for ensuring that the anchor leg is not pushed out of the bore by the spring means.

3. A cultivating tool as claimed in claim 2 wherein the frame defines a pair of said bores which are parallel one with the other, and in each of which slides a respective anchor leg (13).

4. A cultivating tool as claimed in claim 3 wherein the axis of rotation of said cultivator blade or blades (24) is parallel to the plane containing said anchor legs and is orthogonal to the legs.

5. A cultivating tool according to any one of the preceding claims further comprising an inhibit mechanism (27, 28, 29) operably associated with one of said anchor legs for preventing operation of the tool until that anchor leg is moved a certain distance against the action of said spring means.

6. A cultivating tool according to claim 5 wherein said inhibit mechanism comprises detent means (29) mounted for movement with said anchor leg, and an electrical switch (27), operable to de-energise said drive means, said switch being operated by an operating member (28) normally biassed into said detent means, in which position the drive means is de-energised, and which retracts to operate said switch when the anchor leg is moved, to thus allow the drive means to operate.

## Patentansprüche

1. Bodenbearbeitungsgerät, welches einen Rahmen (10), mit einem Griff (11), der beim Gebrauch vom Benutzer ergriffen werden kann, eine auf diesem Rahmen befestigte Antriebsvorrichtung, zumindest ein durch die Antriebsvorrichtung in Drehung versetzbares Bodenbearbeitungsmesser (24) und ein Paar Stützbeine (13) zur Verhinderung einer Bewegung des Werkzeuges entlang des Bodens während der Benutzung aufweist, wobei das Gerät dadurch gekennzeichnet ist, daß die genannten Stützbeine (13) in entsprechenden Bohrungen in dem genannten Rahmen (10) verschiebbar montiert sind, und daß Federelemente (14) vorgesehen sind, durch die jedes Stützbein in eine Richtung außerhalb seiner entsprechenden Bohrung vorgespannt ist, derart, daß das Gewicht des Gerätes bei Auflage der äußeren Enden der genannten Beine am Grund abgestützt wird und die von dem Bodenbearbeitungsmesser (24) hervorgerufenen Reaktionskräfte aufgefangen werden.

2. Bodenbearbeitungsgerät nach Anspruch 1, wobei der Rahmen derart ausgestaltet ist, daß er ein Paar sich längs erstreckender Bohrungen bildet, in denen jeweils ein entsprechendes Stützbein (13) verschiebbar montiert ist, und wobei innerhalb jeder Bohrung das genannte Federelement (14) angeordnet ist und zwischen einem entsprechenden ersten Stoppglied (30) in der Bohrung und dem entsprechenden Stützbein wirkt, um das Stützbein in eine aus der Bohrung herausführende Richtung vorzuspannen, wobei weitere Stoppteile (31) vorgesehen sind, die sicherstellen, daß das Stützbein durch das Federelement nicht aus der Bohrung herausgedrückt wird.

3. Bodenbearbeitungsgerät nach Anspruch 2, wobei der Rahmen ein Paar der genannten Bohrungen bildet, die zueinander parallel stehen und wobei in jeder ein zugehöriges Stützbein (13) gleitet.

4. Bodenbearbeitungsgerät nach Anspruch 3, wobei die Rotationsachse des genannten Bodenbearbeitungsmessers oder der -messer (24) parallel zu der die Stützbeine enthaltenden Ebene und senkrecht auf die Stützbeine angeordnet ist.

5. Bodenbearbeitungsgerät nach einem der vorhergehenden Ansprüche, wobei weiters ein Hemmechanismus (27, 28, 29) vorgesehen ist, der mit einem der Stützbeine so in Wirkverbindung steht, daß er die Arbeit des Gerätes so lange verhindert, bis das Stützbein über eine gewisse Distanz gegen die Kraft des genannten Federelementes bewegt wird.

6. Bodenbearbeitungsgerät nach Anspruch 5, wobei das genannte Hemmmechanismus eine zue Bewegung mit dem genannten Stützbein eingerichtete Rasteinrichtung (29) und einen elektrischen Schalter (27) für die Abschaltung der genannten Antriebsvorrichtung aufweist, wobei der Schalter durch ein Betätigungsglied (28) geschaltet wird, das normalerweise in die Rasteinrichtung vorgespannt ist, in welcher Position die Antriebsvorrichtung abgeschaltet ist und das sich zur Betätigung des Schalters zurückzieht, wenn das Stützbein bewegt wird, um so ein Arbeiten der Antriebsvorrichtung zu gestatten.

**Revendications**

1. Outil formant motoculteur comportant un cadre (10) muni d'une poignée (11) qui, en cours d'utilisation peut être saisie par un opérateur, des moyens d'entraînement montés sur ledit cadre, au moins une lame (24) de motoculteur montée de manière à pouvoir être entraînée en rotation par lesdits moyens d'entraînement, une paire de jambes d'ancrage (13) servant à bloquer le déplacement de l'outil au sol pendant l'utilisation, ledit outil étant caractérisé en ce que lesdites jambes d'ancrage (13) sont montées de façon à pouvoir coulisser dans des logements associés ménagés dans ledit cadre (10), des moyens en forme de ressorts (14) étant prévus pour solliciter chaque jambe d'ancrage dans une direction tournée vers l'extérieure de son logement respectif, de manière à réaliser le soutien du poids de l'outil par mise en contact de l'extrémité inférieure desdites jambes avec le sol, et de manière à absorber les forces de réaction produites par la lame (24) du motoculteur.

2. Outil formant motoculteur selon la revendication 1, dans lequel le cadre est agencé de manière à définir un couple de logements allongés dans chacun desquels une jambe respective d'ancrage (13) est montée de façon à pouvoir coulisser, et dans lequel lesdits moyens en forme de ressorts (14) sont reçus dans chaque logement pour agir entre en premier dispositif de butée (30) situé dans le logement et la jambe d'ancrage respective de manière à solliciter cette jambe d'ancrage dans une direction dirigée vers l'extérieur du logement, un autre dispositif de butée (31) étant prévu de manière à s'assurer que la jambe d'ancrage n'est pas repoussée hors du logement par les moyens en forme de ressorts.

3. Outil formant motoculteur selon la revendication 2, dans lequel le cadre définit la paire de logements, qui sont parallèles l'un à l'autre et dans chacun desquels coulisse une jambe respective d'ancrage (13).

4. Outil formant motoculteur selon la revendication 3, dans lequel l'axe de rotation de la ou desdites lames (24) du motoculteur est parallèle au plan défini par les jambes d'ancrage, et est perpendiculaire auxdites jambes.

5. Outil formant motoculteur selon l'une quelconque des revendications précédentes, comportant en outre un mécanisme d'inhibition (27, 28, 29) associé de façon opérationnelle à l'une desdites jambes d'ancrage afin d'empêcher le fonctionnement de l'outil jusqu'à ce que la jambe d'ancrage soit déplacée sur une certaine distance à l'encontre de l'action desdits moyens formant ressorts.

6. Outil formant motoculteur suivant la revendication 5, dans lequel ledit mécanisme d'inhibition comporte des moyens de déclenchement (29) montés de manière à se déplacer avec ladite jambe d'ancrage, et un interrupteur électrique (27) pouvant agir de manière à déconnecter lesdits moyens d'entraînement, ledit interrupteur étant actionné par un organe de manoeuvre (28) normalement repoussé en appui contre lesdits moyens de déclenchement, auquel cas les moyens d'entraînement sont déconnectés dans cette position, organe qui se rétracte de manière à actionner ledit interrupteur lorsque la jambe d'ancrage est déplacée, ce qui permet de mettre en fonctionnement les moyens d'entraînement.

0 094 995

FIG.1

FIG.2

1

0 094 995

FIG.3

2

FIG.4